# EUROPEAN PATENT SPECIFICATION

(11) **EP 3 216 606 B1**
(45) Date of publication and mention of the grant of the patent: **04.09.2019**
(21) Application number: 15856515.0
(22) Date of filing: 16.10.2015
(51) Int. Cl.: B41F 33/00, B41F 35/00, B41F 33/14

(54) **PRINTER GAS RECOVERY DEVICE**
DRUCKERGASRÜCKGEWINNUNGSVORRICHTUNG
DISPOSITIF DE RÉCUPÉRATION DE GAZ D'IMPRIMANTE

(30) Priority: 06.11.2014 JP 2014225819
(43) Date of publication of application: 13.09.2017
(73) Proprietor: Komori Corporation, Tokyo 130-8666 (JP)
(72) Inventor: OHRUI,Koichi, Tsukuba-shi Ibaraki 300-1268 (JP); YUASA,Yutaka, Tsukuba-shi Ibaraki 300-1268 (JP); IWABUCHI,Shigenori, Tsukuba-shi Ibaraki 300-1268 (JP)
(74) Representative: Samson & Partner Patentanwälte mbB
(86) International application number: PCT/JP2015/079285
(87) International publication number: WO 2016/072242

(56) References cited:
- JP-A- 2005 238 705
- JP-A- 2006 231 593
- JP-A- 2009 113 429

## Description

### Technical Field

The present invention relates to a gas collection device of a printing press, which is configured to collect a gas of a volatile organic compound produced in a printing press.

### Background Art

Ink used in a conventional offset printing press, dampening water of a dampener, and a cleaning solution for roller cleaning contain volatile organic compounds. The volatile organic compounds gasify in the printing press and diffuse as a gas. If this gas diffuses in an enormous amount, the work environment deteriorates.

Conventionally, to prevent the gas of the volatile organic compound from diffusing in an enormous amount in a printing press, a cleaning device as described in patent literature 1 has been proposed.

The cleaning device disclosed in patent literature 1 includes a cleaning solution tank that stores a cleaning solution, and a cleaning roller that rotates while being partially dipped in the cleaning solution in the cleaning solution tank. The cleaning solution contains a volatile solvent and dissolves ink adhered to the cleaning roller.

The cleaning roller rotates in contact with a roller for ink supply. The roller for ink supply is a distribution roller provided on a print unit of the printing press. Ink adhered to the roller for ink supply is transferred to the cleaning roller and dissolved by the cleaning solution when a part of the cleaning roller passes through the cleaning solution.

When the cleaning roller is dipped in the cleaning solution in the cleaning solution tank, the cleaning solution adheres to the outer surface of the cleaning roller.

The cleaning solution is mostly scraped by a blade that comes into contact with the cleaning roller, but partially remains on the outer surface of the cleaning roller. For this reason, when the cleaning roller contacts the roller for ink supply, the cleaning solution is transferred to the roller for ink supply. The cleaning solution is further transferred from the roller to another roller in the print unit.

According to this cleaning device, the cleaning roller is inserted into the opening portion of the cleaning solution tank, and a gas hardly leaks from the cleaning solution tank. It is therefore possible to prevent the gas of the volatile organic compound from diffusing in an enormous amount from the cleaning solution tank.

### Related Art Literature

### Patent Literature

Patent Literature 1: Japanese Patent Laid-Open No. 2010-214927

JP 2005 238 705 A discloses a gas collection device of a printing press according to the features of the preamble of independent claims 1 and 2.

### Disclosure of Invention

### Problem to be Solved by the Invention

When the cleaning device described in patent literature 1 is used, the cleaning solution is transferred to each roller in the print unit. The cleaning solution is exposed to the surface of each roller and can easily gasify. For this reason, a gas produced by the gasification of the cleaning solution diffuses to the periphery of the printing press. That is, the cleaning device described in patent literature 1 cannot prevent deterioration of the work environment in which the printing press is installed.

The present invention has been made to solve the above-described problem, and has as its object to provide a gas collection device of a printing press, which can prevent a work environment in which the printing press is installed from being deteriorated by the gas of a volatile organic compound.

### Means of Solution to the Problem

While the invention is defined in the independent claims, further aspects of the invention are set forth in the dependent claims, the drawings and the following description.

In order to achieve the above object, according to the present invention, there is provided a gas collection device of a printing press, comprising a gas treatment unit including a gas chamber, a cover portion configured to cover a print unit of a printing press, and a gas transfer unit configured to suck a gas of a volatile organic compound produced in the print unit from an inside of the cover portion and transfer the gas to the gas chamber.

### Effect of the Invention

According to the present invention, the gas of a volatile organic compound produced in a print unit is sent by a gas transfer unit from the inside of a cover portion to the gas chamber of a gas treatment unit. For this reason, the gas of the volatile organic compound produced in the print unit is collected without leaking to the outside of the cover portion.

Hence, according to the present invention, it is possible to provide a gas collection device of a printing press, which can prevent a work environment in which the printing press is installed from being deteriorated by the gas of a volatile organic compound.

### Brief Description of Drawings

Fig. 1 is a block diagram showing the arrangement of a gas collection device of a printing press according to the first embodiment;
Fig. 2A is a side view of a liquid waste collection device showing a state in which a liquid waste collect tank is located at a standby position, which includes a cutaway view of the liquid waste collect tank;
Fig. 2B is a side view of the liquid waste collection device showing a state in which the liquid waste collect tank is located at a use position, which includes a cutaway view of the liquid waste collect tank;
Fig. 3 is a flowchart for explaining the operation of a cleaning device;
Fig. 4 is a flowchart for explaining the operation of the gas collection device;
Fig. 5 is a block diagram showing the arrangement of a gas collection device of a printing press according to the second embodiment;
Fig. 6 is a flowchart for explaining the operation of the gas collection device according to the second embodiment;
Fig. 7 is a block diagram showing the arrangement of a gas collection device of a printing press according to the third embodiment;
Fig. 8 is a block diagram showing the arrangement of a gas collection device of a printing press according to the fourth embodiment;
Fig. 9 is a flowchart for explaining the operation of the gas collection device of the printing press according to the fourth embodiment;
Fig. 10 is a block diagram showing the arrangement of a gas collection device of a printing press according to the fifth embodiment; and
Fig. 11 is a flowchart for explaining the operation of the gas collection device of the printing press according to the fifth embodiment.

### Best Mode for Carrying Out the Invention

### (First Embodiment)

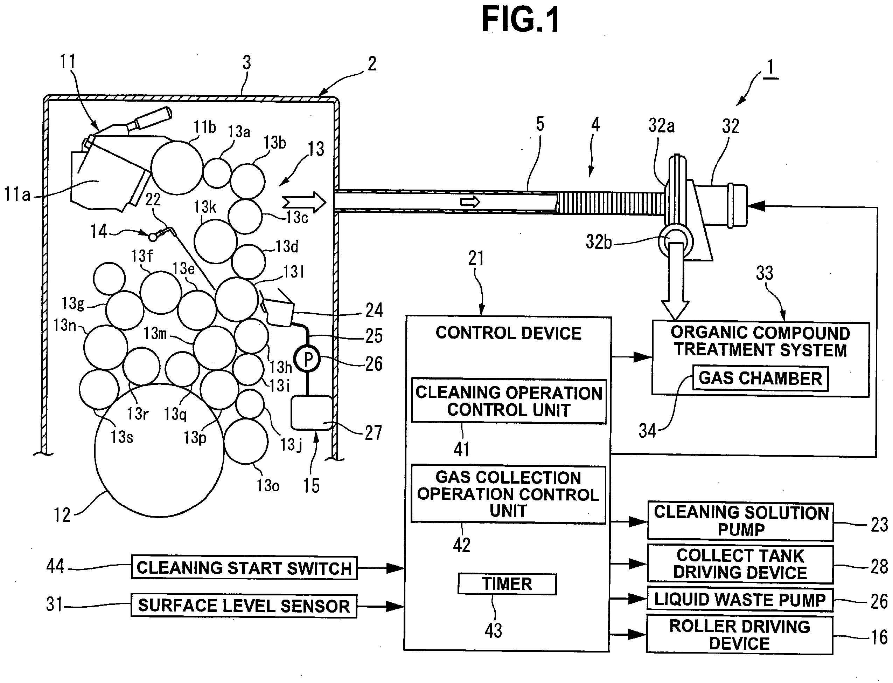

A gas collection device of a printing press according to an embodiment of the present invention will now be described in detail with reference to Figs. 1 to 4.

A gas collection device 1 shown in Fig. 1 is configured to collect a gas of a volatile organic compound produced in a print unit 2 of a printing press (not shown). The printing press is a printing press using a roller for ink supply, such as a sheet-fed offset printing press, a web offset printing press, or an intaglio printing press. In this embodiment, an example in which the present invention is applied to the print unit 2 of a sheet-fed offset printing press will be described.

The print units 2 are provided in the printing press as many as the number of colors. Fig. 1 illustrates only the print unit 2 of one color.

The print unit 2 shown in Fig. 1 includes a cover 3 that forms an envelope. All devices and constituent parts of the print unit 2 are covered by the cover 3 from the horizontal direction and from above. The cover 3 employs a structure that has less vent holes than in a conventional cover and prevents a gas in the print unit 2 from easily leaking. A suction hose 5 of a gas transfer device 4 (to be described later) is connected to the cover 3 according to this embodiment. In this embodiment, the cover 3 forms a "cover portion" in the present invention.

The devices and constituent parts of the print unit 2 are an ink supply device 11 located at the uppermost portion in the cover 3, a plate cylinder 12 located at the lower portion in the cover 3, an ink roller group 13 configured to feed ink from the ink supply device 11 to the plate cylinder 12, a dampener (not shown) configured to supply dampening water to the plate cylinder 12, and a cleaning device 14 and a liquid waste collection device 15 used at the time of cleaning.

The ink supply device 11 supplies ink from an ink fountain 11a to an ink fountain roller 11b.

The plate cylinder 12 contacts a blanket cylinder (not shown) and transfers the ink to the blanket cylinder.

The ink roller group 13 includes a ductor roller 13a that contacts the ink fountain roller 11b, a plurality of distribution rollers 13b to 13j, a plurality of oscillating rollers 13k to 13n, and a plurality of ink form rollers 13o to 13s. The rollers of the ink roller group 13 and the plate cylinder 12 are driven and rotated by a roller driving device 16. The operation of the roller driving device 16 is controlled by a control device 21 (to be described later).

The cleaning device 14 is configured to clean the rollers of the ink roller group 13. When changing the ink color after the end of printing in the print unit 2 or when saving the print unit 2 in a stop state, the rollers of the ink roller group 13 are cleaned by the cleaning device 14.

The cleaning device 14 includes a cleaning solution nozzle 22 that supplies a cleaning solution to one roller (the oscillating roller 131 in Fig. 1), and a cleaning solution pump 23 that supplies the cleaning solution to the cleaning solution nozzle 22. A cleaning solution containing a volatile organic compound is used. The operation of the cleaning solution pump 23 is controlled by the control device 21 (to be described later). Under the control of the control device 21, the cleaning solution pump 23 operates to supply the cleaning solution to the cleaning solution nozzle 22 in a state in which the oscillating roller 131 rotates in a direction reverse to the direction in normal printing.

When supplied to the rotating oscillating roller 131, the cleaning solution is transferred to the other distribution rollers 13d, 13e, and 13h in contact with the oscillating roller 131 and then further transferred from these rollers to other rollers. As a result, the cleaning solution is transferred to all rollers of the ink roller group 13. When the cleaning solution is fed to each roller in this way, the volatile organic compound contained in the cleaning solution gasifies to generate the gas of the volatile organic compound. The gas will be referred to as a VOC (Volatile Organic Compounds) gas hereinafter.

When the cleaning solution is supplied to the rollers, the ink adhered to and remaining on the outer surface of each roller is dissolved by the cleaning solution. A solution containing the cleaning solution and the ink is made and held on the outer surface of each roller.

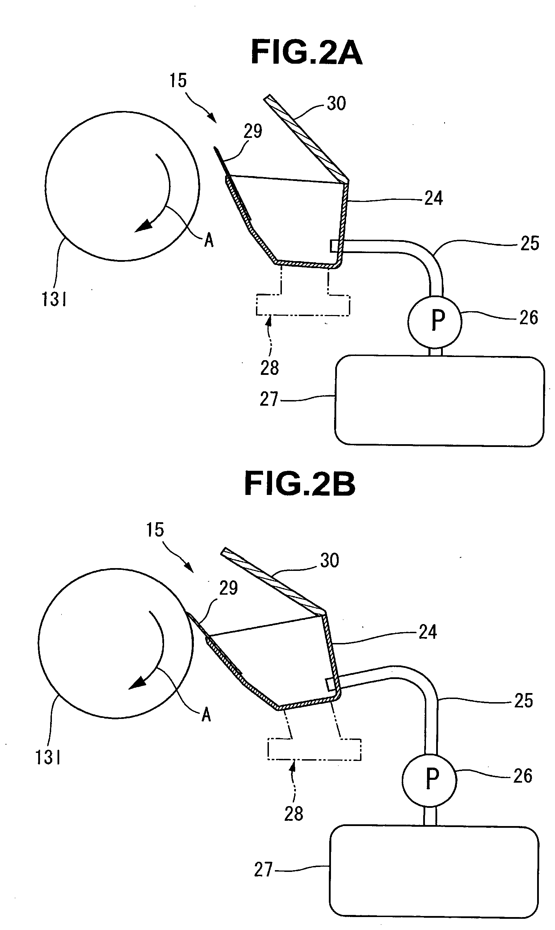

As shown in Figs. 2A and 2B, the liquid waste collection device 15 includes a liquid waste collect tank 24 arranged at a position adjacent to the oscillating roller 131, and a liquid waste tank 27 connected to the liquid waste collect tank 24 via a liquid waste pipe 25 and a liquid waste pump 26.

The liquid waste collect tank 24 is formed into a box shape opening upward and swingably supported by a collect tank driving device 28 (to be described later). A doctor blade 29 and a splash guard 30 are provided on the upper opening portion of the liquid waste collect tank 24.

The doctor blade 29 is disposed at one end of the liquid waste collect tank 24 close to the oscillating roller 131. The doctor blade 29 extends from the one end of the liquid waste collect tank 24 obliquely upward to the upper side of the oscillating roller 131, and substantially forms the opening edge at the one end of the liquid waste collect tank 24.

The splash guard 30 is disposed at the other end of the liquid waste collect tank 24 located on the opposite side of the oscillating roller 131. The splash guard 30 according to this embodiment projects from the other end of the liquid waste collect tank 24 obliquely upward, like the doctor blade 29, and substantially forms the opening edge at the other end. The upper end of the splash guard 30 is located above the upper end of the doctor blade 29.

The liquid waste collect tank 24 according to this embodiment includes a surface level sensor 31 (see Fig. 1) that detects the surface level of a liquid waste stored in the liquid waste collect tank 24. When the surface level of the liquid waste reaches a predetermined level, the surface level sensor 31 sends the detection result as data to the control device 21 (to be described later).

The collect tank driving device 28 has a function of moving the liquid waste collect tank 24 between a retracting position shown in Fig. 2A and a use position shown in Fig. 2B. When the liquid waste collect tank 24 is located at the retracting position, the doctor blade 29 moves away from the oscillating roller 131. When the liquid waste collect tank 24 is located at the use position, the doctor blade 29 contacts the outer surface of the oscillating roller 131.

When the doctor blade 29 contacts the oscillating roller 131 in a state in which the oscillating roller 131 rotates in a direction indicated by an arrow A in Fig. 2B (a direction in which the part in contact with the doctor blade 29 moves to the side of the doctor blade), the liquid adhered to the outer surface of the oscillating roller 131 is scraped by the doctor blade 29 and flows down as a liquid waste to the liquid waste collect tank 24. The liquid that splashes and scatters when scraped by the doctor blade 29 adheres to the splash guard 30 and flows down along the splash guard 30 to the liquid waste collect tank 24 as a liquid waste. The operation of the collect tank driving device 28 is controlled by the control device 21 (to be described later).

The liquid waste pump 26 sucks the liquid waste stored in the liquid waste collect tank 24 by the liquid waste pipe 25 and transfers the liquid waste to the liquid waste tank 27 via the liquid waste pipe 25. The operation of the liquid waste pump 26 is controlled by the control device 21 (to be described later).

The liquid waste tank 27 is configured to store the liquid waste in a closed state.

The gas transfer device 4 forms a "gas transfer unit" in the present invention, and includes a gas collection blower 32 configured to collect the VOC gas in the cover 3, as shown in Fig. 1. A suction portion 32a of the gas collection blower 32 is connected to the inside of the cover 3 via the suction hose 5. A discharge portion 32b of the gas collection blower 32 is connected to an organic compound treatment system 33 (to be described later). When the gas collection blower 32 operates, the VOC gas in the cover 3 is sucked into the suction hose 5 and sent to the organic compound treatment system 33 via the blower 32. The operation of the gas collection blower 32 is controlled by the control device 21 (to be described later). In this embodiment, the gas collection blower 32 and the suction hose 5 form a "gas transfer unit" in the present invention.

The blower 32 shown in Fig. 1 is connected to only the cover 3 of one print unit 2. However, the blower 32 can also be connected to the covers 3 of the remaining print units 2 of the sheet-fed offset printing press. In this case, VOC gas components produced in all the print units 2 are sent to the single organic compound treatment system 33.

The organic compound treatment system 33 is configured to liquefy a VOC gas to generate a liquid of a volatile organic compound, and includes a gas chamber 34 that receives and temporarily stores the VOC gas sent from the gas collection blower 32. The liquid produced by the organic compound treatment system 33 can be reused as the cleaning solution.

The gas chamber 34 is configured to hermetically seal the interior. The operation of the organic compound treatment system 33 is controlled by the control device 21 (to be described later).

In this embodiment, the organic compound treatment system 33 forms a "gas treatment unit" in the present invention. The gas collection device 1 according to this embodiment is formed from the cover 3, the gas transfer device 4, and the organic compound treatment system 33.

The control device 21 includes a cleaning operation control unit 41 that controls the operations of the cleaning device 14 and the liquid waste collection device 15 described above, a gas collection operation control unit 42 that controls the operations of the gas transfer device 4 and the organic compound treatment system 33 described above, and a timer 43. A cleaning start switch 44 to be operated by the operator (not shown) to start cleaning by the cleaning device 14 is connected to the control device 21.

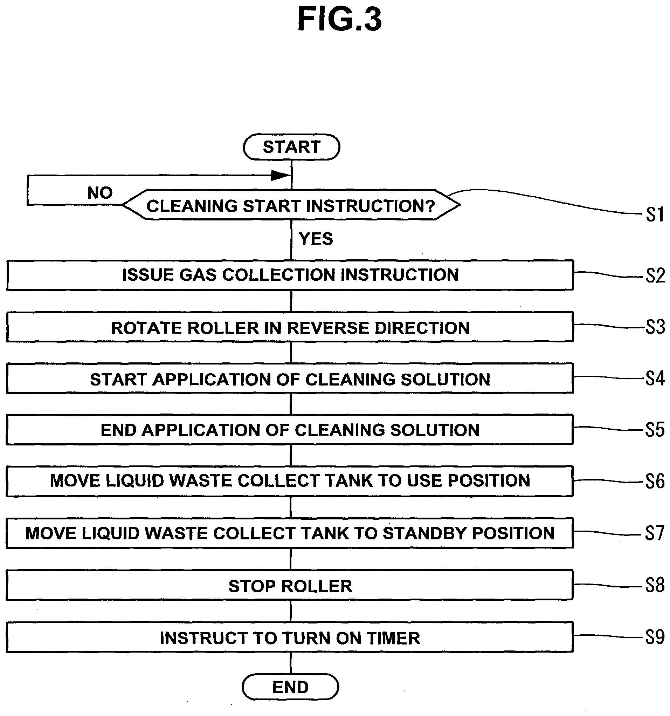

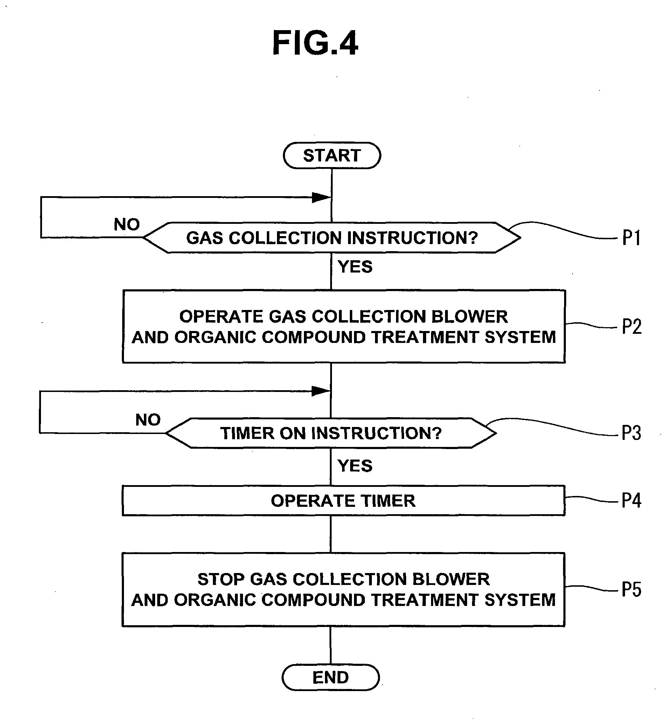

The operation of the gas collection device 1 according to this embodiment, including the arrangement of the control device 21, will be described here with reference to the flowcharts of Figs. 3 and 4.

After the end of a printing operation in the print unit 2, the control device 21 determines the presence/absence of an instruction to start cleaning, as shown in step S1 of the flowchart of Fig. 3. This determination is done by detecting the ON/OFF state of the cleaning start switch 44. If the cleaning start switch 44 is turned on by the operator, the process advances to step S2, and the cleaning operation control unit 41 issues a gas collection instruction to the gas collection operation control unit 42. After the issuance of the gas collection instruction, the gas collection operation control unit 42 executes a gas collection operation, as shown in Fig. 4, as will be described later in detail.

After the gas collection instruction is issued in step S2, as described above, in step S3, the cleaning operation control unit 41 operates the roller driving device 16 to rotate each roller of the ink roller group 13 in a direction reverse to the rotation direction in printing. When the roller driving device 16 thus operates, the oscillating roller 131 shown in Figs. 2A and 2B rotates in the rotation direction in cleaning indicated by the arrow A.

Next, the cleaning operation control unit 41 operates the cleaning solution pump 23 to supply the cleaning solution to the oscillating roller 131 via the cleaning solution nozzle 22. The cleaning solution is transferred and fed from the oscillating roller 131 to all rollers of the ink roller group 13. When the cleaning solution is fed to the rollers, the ink adhered to these members dissolves. Note that at this time, the liquid waste collect tank 24 is located at a standby position shown in Fig. 2A.

The cleaning solution is supplied continuously for a predetermined time. After the elapse of the time, the cleaning operation control unit 41 stops the cleaning solution pump 23 (step S5), and operates the collect tank driving device 28 to move the liquid waste collect tank 24 to the use position shown in Fig. 2B (step S6).

When the liquid waste collect tank 24 moves to the use position, the doctor blade 29 comes into contact with the outer surface of the oscillating roller 131, and the liquid (the solution formed by dissolving the ink by the cleaning solution) adhered to the oscillating roller 131 is scraped as a liquid waste by the doctor blade 29. The liquid waste is stored in the liquid waste collect tank 24. If the surface level of the liquid waste in the liquid waste collect tank 24 reaches a predetermined level, the surface level sensor 31 detects it, and the cleaning operation control unit 41 operates the liquid waste pump 26 to discharge the liquid waste in the liquid waste collect tank 24 to the liquid waste tank 27.

When the oscillating roller 131 contacts the distribution rollers 13d, 13e, and 13h, the liquid components adhered to the distribution rollers are transferred to the portion of the oscillating roller 131 where the doctor blade 29 has scraped the liquid. For this reason, the liquid components adhered to the distribution rollers 13d, 13e, and 13h decrease, and liquid components are transferred from other rollers in contact with the distribution rollers 13d, 13e, and 13h to the distribution rollers 13d, 13e, and 13h. Hence, the liquid components adhered to the rollers of the ink roller group 13 are moved to the oscillating roller 131 via the rollers and collected from the oscillating roller 131 to the liquid waste collect tank 24.

After the liquid waste collect tank 24 is moved to the use position in step S6, the cleaning operation control unit 41 advances to step S7 after the elapse of a predetermined time to operate the collect tank driving device 28 and move the liquid waste collect tank 24 to the standby position shown in Fig. 2A. When the liquid waste collect tank 24 moves o the standby position, the doctor blade 29 moves away from the oscillating roller 131. After that, the cleaning operation control unit 41 stops the roller driving device 16 (step S8), and an instruction (time ON instruction) to operate the timer 43 is issued to the gas collection operation control unit 42 (step S9). When the timer ON instruction is issued, the cleaning operation by the cleaning device 14 ends.

On the other hand, after the end of the printing operation in the print unit 2, in step P1 of the flowchart of Fig. 4, the gas collection operation control unit 42 of the control device 21 determines whether the cleaning operation control unit 41 has issued the gas collection instruction. If the cleaning operation control unit 41 issues the gas collection instruction to the gas collection operation control unit 42, the process advances to step P2, and the gas collection operation control unit 42 operates the gas collection blower 32 and the organic compound treatment system 33.

When the gas collection blower 32 starts operating, the VOC gas produced in the print unit 2 during cleaning is sucked from the cover 3 and sent to the gas chamber 34 of the organic compound treatment system 33. When the organic compound treatment system 33 starts operating, the VOC gas in the gas chamber 34 is liquefied to generate a reusable liquid. That is, the VOC gas produced in the print unit 2 is collected.

During the operation of collecting the VOC gas, the gas collection operation control unit 42 determines whether the cleaning operation control unit 41 has issued the timer ON instruction, as shown in step P3. After the cleaning operation control unit 41 issues the timer ON instruction, in step P4, the gas collection operation control unit 42 operates the timer 43 and maintains the current state until a predetermined collection time elapses. The collection time is set to be longer than the time of past collection. The time of past collection here means an elapsed time after the stop of the cleaning device 14 until the discharge of the VOC gas in the cover 3 is completed. This is the time actually needed for gas collection in the past.

After the elapse of the collection time, in step P5, the gas collection operation control unit 42 stops the gas collection blower 32 and the organic compound treatment system 33.

When the gas collection blower 32 and the organic compound treatment system 33 stop, the VOC gas collection operation by the gas collection device 1 is completed.

According to the thus configured gas collection device 1, the VOC gas produced in the print unit 2 is collected to the organic compound treatment system 33 without leaking to the outside of the cover 3.

Hence, according to this embodiment, it is possible to provide a gas collection device of a printing press, which can prevent a work environment in which a sheet-fed offset printing press is installed from being deteriorated by the gas of a volatile organic compound.

The print unit 2 according to this embodiment includes the cleaning device 14 that supplies a volatile organic compound in a liquid state to the roller for ink supply. In addition, the gas collection device 1 according to this embodiment includes the control device 21 that controls the operations of the gas transfer device 4 and the organic compound treatment system 33 based on the operation of the cleaning device 14.

According to this embodiment, the gas transfer device 4 and the organic compound treatment system 33 can automatically be operated at the time of cleaning by the cleaning device 14. It is therefore possible to provide a gas collection device of a printing press, which can reliably collect the VOC gas. Additionally, since the gas transfer device 4 and the organic compound treatment system 33 can be at rest when cleaning is not being performed, wasteful power consumption can be prevented.

### (Second Embodiment)

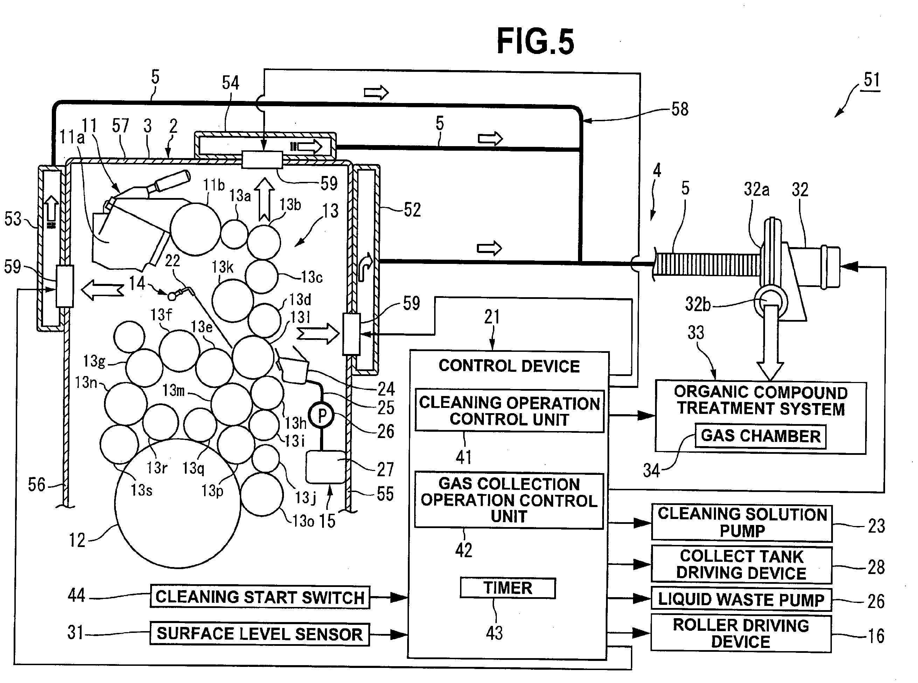

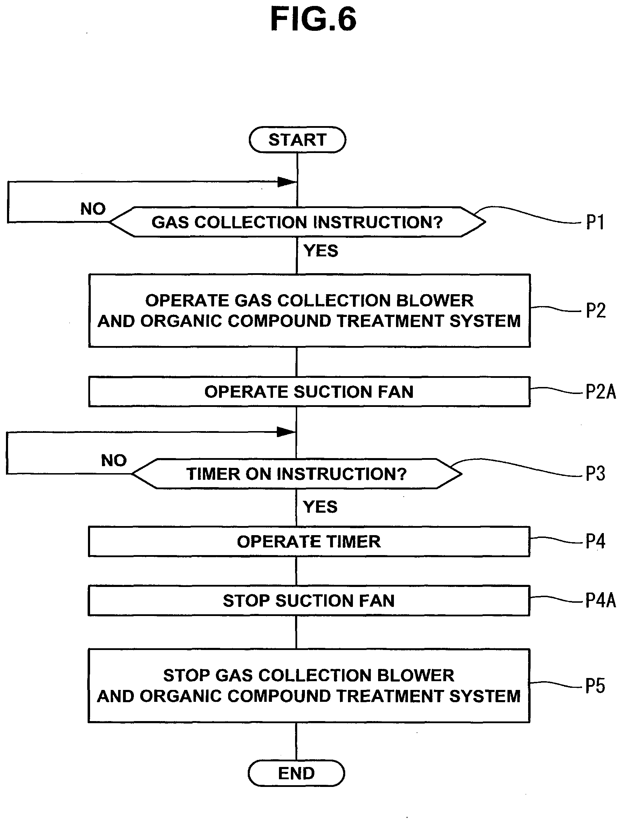

A gas transfer device can be configured as shown in Figs. 5 and 6. The same reference numerals as in Figs. 1 to 4 denote the same or similar members in Figs. 5 and 6, and a detailed description thereof will appropriately be omitted.

In a gas collection device 51 shown in Fig. 5, the arrangement of a gas transfer device 4 is different from that in the gas collection device 1 described in the first embodiment, and the rest of the arrangement is the same.

As shown in Fig. 5, the gas transfer device 4 according to this embodiment includes a plurality of ducts 52 to 54 provided on a cover 3 of a print unit 2. The ducts 52 to 54 are provided on two side walls 55 and 56 and a ceiling wall 57 of the cover 3, respectively. Each of the ducts 52 to 54 is formed into a shape extending from one end to the other end of the cover 3 in the axial direction of rollers in the print unit 2. The ducts 52 to 54 are connected to a suction portion 32a of a gas collection blower 32 via a suction hose 5. That is, the inside of the cover 3 communicates with a gas chamber 34 by a gas passage 58 formed from the ducts 52 to 54, the suction hose 5, and the like.

A plurality of suction fans 59 are provided on the side walls 55 and 56 and the ceiling wall 57 of the cover 3. The suction fans 59 suck air in the cover 3 to the ducts 52 to 54. That is, a VOC gas produced in the cover 3 is sucked by the suction fans 59 together with the air in the cover 3 and lead to the ducts 52 to 54.

The plurality of suction fans 59 for each duct are arranged at a predetermined interval in the longitudinal direction (the axial direction of the rollers, which is orthogonal to the sheet surface of Fig. 5) of the ducts 52 to 54. The operations of the suction fans 59 are controlled by a gas collection operation control unit 42 of a control device 21.

The gas collection operation control unit 42 according to this embodiment operates as shown in the flowchart of Fig. 6. That is, when a cleaning operation starts in the print unit 2, and a cleaning operation control unit 41 of the control device 21 issues a gas collection instruction (step P1), the gas collection operation control unit 42 operates the gas collection blower 32 and an organic compound treatment system 33 in step P2. In step P2A, the gas collection operation control unit 42 operates the suction fans 59.

When the suction fans 59 start operating, the VOC gas produced in the cover 3 is sucked by the suction fans 59 and lead from the inside of the cover 3 to the ducts 52 to 54. The VOC gas is further sucked by the gas collection blower 32 from the ducts 52 to 54 and sent to the gas chamber 34 of the organic compound treatment system 33 via the suction hose 5.

After the cleaning has ended, and the collection time measured by a timer 43 has elapsed, the gas collection operation control unit 42 stops the suction fans 59 (step P4A), and then stops the gas collection blower 32 and the organic compound treatment system 33 (step P5).

Hence, in the gas collection device 51 according to this embodiment, the VOC gas produced in the cover 3 is sucked by the suction fans 59 from the inside of the cover 3 in three directions. It is therefore possible to efficiently discharge the VOC gas in the cover 3.

Hence, according to this embodiment, it is possible to provide a gas collection device of a printing press, which can quickly and reliably collect the VOC gas produced in the cover 3.

Note that in this embodiment, an example in which the plurality of ducts 52 to 54 and the plurality of suction fans 59 are used has been described. However, as for the ducts 52 to 54 and the suction fans 59, the same effect as described above can be obtained if at least one duct and one suction fan are provided.

### (Third Embodiment)

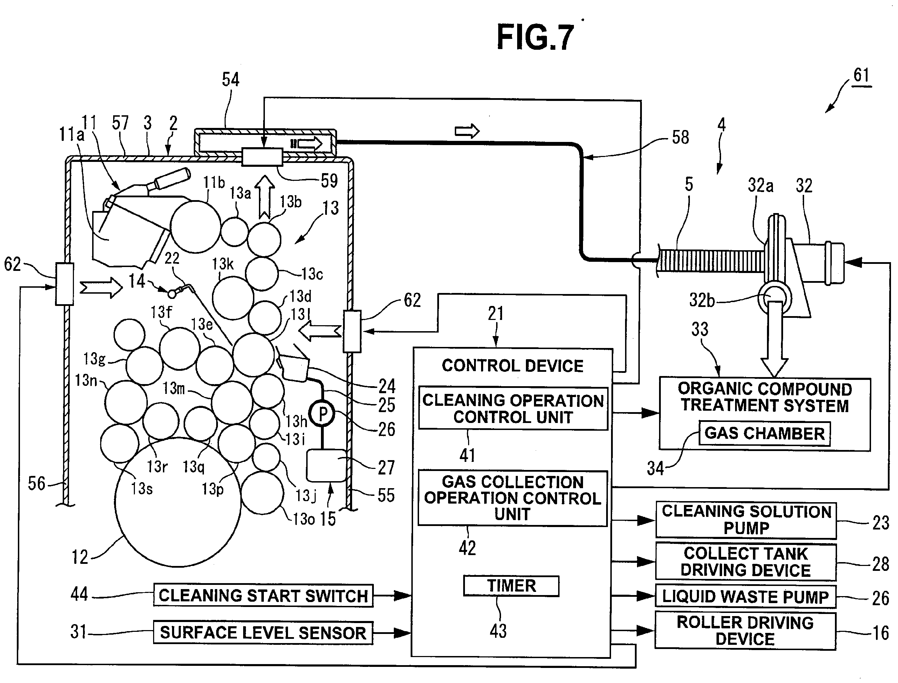

A gas transfer device can also be configured as shown in Fig. 7. The same reference numerals as in Figs. 1 to 6 denote the same or similar members in Fig. 7, and a detailed description thereof will appropriately be omitted.

In a gas collection device 61 shown in Fig. 7, the arrangement of a gas transfer device 4 is different from those in the gas collection devices 1 and 51 described in the first and second embodiments, and the rest of the arrangement is the same.

The gas transfer device 4 shown in Fig. 7 includes suction fans 59 provided on a ceiling wall 57 of a cover 3, and blower fans 62 provided on both side walls 55 and 56 of the cover 3. The blower fans 62 are configured to suck air (outside air) outside the cover 3 and introduce it into the cover 3. As the blower fans 62, blower fans whose quantity of air equals at least that of the suction fans 59 are used. The quantity of air of the blower fans 62 here means the sum of the quantities of air of all the blower fans 62. In addition, the quantity of air of the suction fans 59 here means the sum of the quantities of air of all the suction fans 59.

The operations of the blower fans 62 are controlled by a gas collection operation control unit 42 of a control device 21. The blower fans 62 according to this embodiment operate in synchronism with the suction fans 59.

Note that the number of suction fans 59 and the number of blower fans 62 can be changed as needed.

According to this embodiment, when a VOC gas in the cover 3 is sucked by the suction fans 59, outside air is introduced by the blower fans 62 into the cover 3. For this reason, the pressure in the cover 3 never changes to a negative pressure, and suction of the VOC gas by the suction fans 59 is prompted.

Hence, according to this embodiment, since the VOC gas in the cover 3 is efficiently sent to an organic compound treatment system 33, the volatile VOC gas can be collected more quickly and reliably.

In the gas collection devices 1, 51, and 61 according to the first to third embodiments, the gas transfer device 4 operates in synchronism with the cleaning operation that starts when a cleaning start switch 44 is turned on. However, the gas collection device according to the present invention is not limited to this. For example, when employing an arrangement for automatically performing the process from the end of printing up to cleaning, an arrangement that detects the start of the cleaning operation by a sensor (not shown) and causes the gas transfer device 4 to start operating based on the detection result can be employed.

### (Fourth Embodiment)

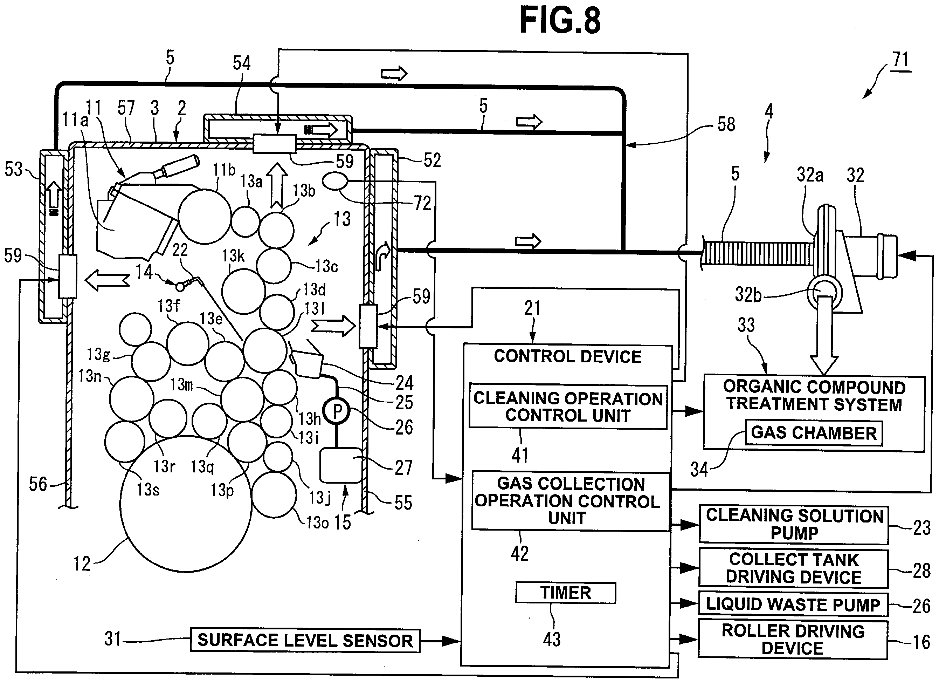

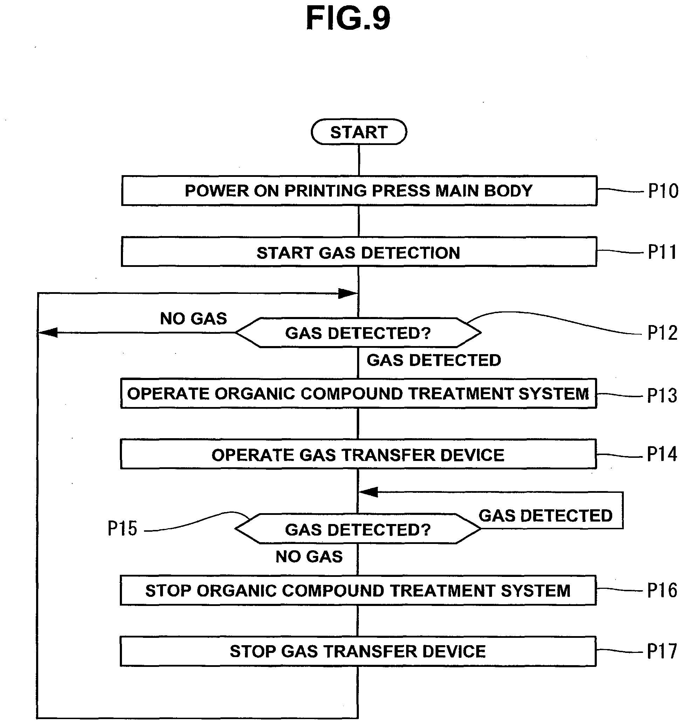

A gas collection device according to the present invention can be configured as shown in Figs. 8 and 9. The same reference numerals as in Figs. 1 to 6 denote the same or similar members in Figs. 8 and 9, and a detailed description thereof will appropriately be omitted.

A gas collection device 71 according to this embodiment includes a gas detector 72 that detects a VOC gas in a cover 3. The gas detector 72 is located at the uppermost portion in the cover 3, and sends a detection result as a signal to a control device 21. A gas collection operation control unit 42 of the control device 21 according to this embodiment employs an arrangement for controlling the operations of a gas transfer device 4 and an organic compound treatment system 33 based on the detection result of the gas detector 72.

As the gas transfer device 4, the same device as shown in Fig. 5, that is, a gas transfer device that sucks the VOC gas from the inside of the cover 3 using a plurality of suction fans 59 is used.

The gas collection operation control unit 42 according to this embodiment operates as shown in the flowchart of Fig. 9. That is, after a printing press main body including a print unit 2 is powered on in step P10 of the flowchart of Fig. 9, the gas collection operation control unit 42 performs gas detection by the gas detector 72 in step P11. In step P12, it is determined whether the gas detector 72 has detected a VOC gas.

At this time, if a cleaning operation is being performed, the gas detector 72 detects a VOC gas gasified from a cleaning solution. In the print unit 2, not only the cleaning solution but also ink and dampening water of a dampener use a volatile organic compound. For this reason, if the concentration of the VOC gas produced from the ink and dampening water exceeds a predetermined concentration, the gas detector 72 detects the VOC gas even during an operation other than cleaning.

If the gas detector 72 detects the VOC gas, the gas collection operation control unit 42 operates the organic compound treatment system 33 in step P13, and then operates the gas transfer device 4 in step P14. If the gas transfer device 4 thus starts operating, the VOC gas produced in the cover 3 is sucked by the plurality of suction fans 59 and sent to ducts 52 to 54. The VOC gas in the ducts 52 to 54 is sucked by a gas collection blower 32 and sent to a gas chamber 34 of the organic compound treatment system 33 via a suction hose 5.

After the gas transfer device 4 has started operating, in step P15, the gas collection operation control unit 42 determines whether the gas detector 72 is detecting the gas. If the gas detector 72 stops detecting the gas (if the concentration of the VOC gas falls below a predetermined concentration), the gas collection operation control unit 42 stops the organic compound treatment system 33 (step P16), and then stops the gas transfer device 4 (step P17). After that, the gas collection operation control unit 42 returns to step P12, and repeats the above-described operation until the printing press main body is powered off.

According to this embodiment, when the VOC gas is produced in the cover 3, the gas detector 72 detects the gas, and the gas transfer device 4 and the organic compound treatment system 33 start operating.

For this reason, since the gas transfer device 4 and the organic compound treatment system 33 can automatically be operated in correspondence with the VOC gas generation state, it is possible to provide a gas collection device of a printing press, which can reliably collect the VOC gas. Additionally, since the gas transfer device 4 and the organic compound treatment system 33 are at rest when no VOC gas is produced, wasteful power consumption can be prevented.

### (Fifth Embodiment)

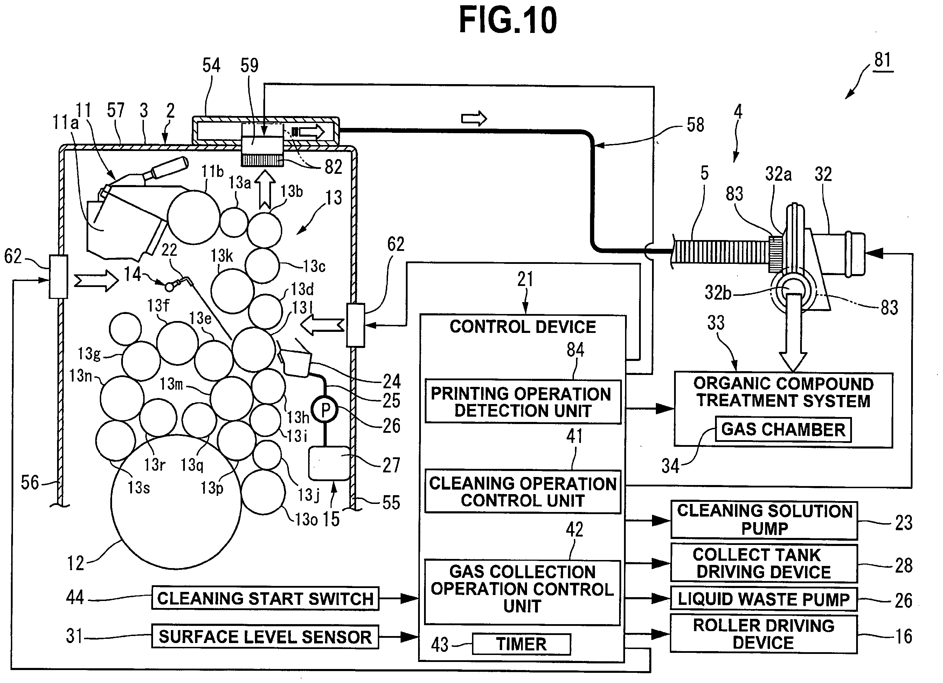

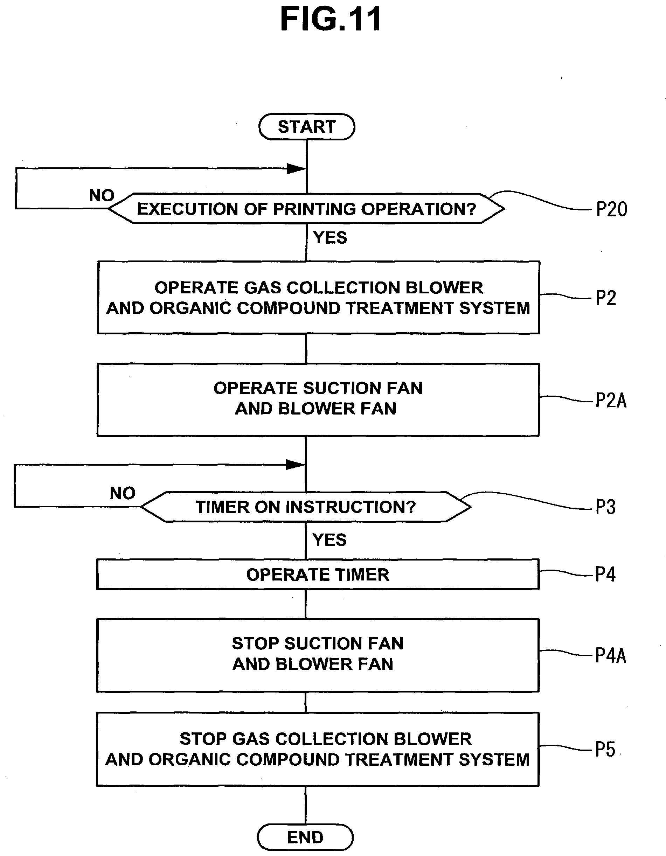

A gas collection device according to the present invention can be configured as shown in Figs. 10 and 11. The same reference numerals as in Figs. 1 to 7 denote the same or similar members in Figs. 10 and 11, and a detailed description thereof will appropriately be omitted.

In a gas collection device 81 shown in Fig. 10, the arrangements of a gas transfer device 4 and a control device 21 are different from those in the gas collection device 61 described in the third embodiment, and the rest of the arrangement is the same. In the gas transfer device 4 of the gas collection device 81 according to this embodiment, filters 82 are detachably attached to the suction ports of all suction fans 59, and a filter 83 is detachably attached to a suction portion 32a of a gas collection blower 32.

In a print unit 2, an ink mist (not shown) including fine ink particles is generated during printing. The ink mist adheres to the above-described filters 82 and 83. Hence, in the gas collection device 81, the gas collection blower 32 and the suction fans 59 are operated during printing as well, thereby collecting not only a VOC gas produced from ink but also the ink mist and preventing them from leaking to the outside of a cover 3. To implement this, the control device 21 according to this embodiment includes a printing operation detection unit 84.

The printing operation detection unit 84 is configured to detect execution of a printing operation in the print unit 2, and is formed by, for example, a print start switch (not shown). The control device 21 according to this embodiment waits for printing operation detection by the printing operation detection unit 84, as shown in step P20 of the flowchart of Fig. 11, and advances to step P2 when a printing operation is detected. In step P2, a gas collection operation control unit 42 operates the gas collection blower 32 and an organic compound treatment system 33.

From step P2, the same control as that when employing the second embodiment described with reference to Fig. 6 is performed. Note that in step P2A, the suction fans 59 and blower fans 62 start operating. In step P4A, the suction fans 59 and the blower fans 62 stop operating. That is, in this embodiment, when the printing operation is executed, the gas collection blower 32, the organic compound treatment system 33, the suction fans 59, and the blower fans 62 start operating. These devices stop after cleaning has ended after the end of the printing.

Each filter 82 may be provided not on the suction port of the suction fan 59 but on the exhaust port, as indicated by an alternate long and two short dashed line. The filter 83 may be provided not on the suction portion 32a of the gas collection blower 32 but on a discharge portion 32b, as indicated by an alternate long and two short dashed line. Not both the suction fans 59 and the gas collection blower 32 need be provided with the filters. That is, the same effect as in the illustrated embodiment can be obtained if the suction fans 59 or the gas collection blower 32 is at least provided with a filter.

When providing the filters 82 on the suction fans 59, not all the suction fans 59 need be provided with the filters 82. However, if at least one suction fan 59 without the filter 82 exists, the filter 83 is preferably provided on the gas collection blower 32.

Not only the gas transfer device 4 including the blower fans 62 but also the gas transfer devices 4 without the blower fans 62 shown in Figs. 1, 5, and 8 can also be equipped with the filters 82 and 83.

The VOC gas or ink has a smell. In the above-described first to fifth embodiments, since the cover 3 employs the arrangement capable of preventing the gas in the print unit 2 from easily leaking, the smell can be prevented from leaking to the outside of the cover portion. The smell is eliminated as the VOC gas is treated. That is, each the gas transfer devices 4 shown in the first to fifth embodiments sucks a gas containing a smell component produced in the print unit 2 from the inside of the cover 3.

In addition, a filter (not shown) containing, for example, activated carbon with a deodorizing effect can be provided on the suction portion 32a or discharge portion 32b of the gas collection blower 32 or the suction port or exhaust port of each suction fan 59. When the filter of activated carbon or the like is provided, deodorization can be done before the VOC gas treatment step.

In the print unit 2, heat is generated from, for example, a driving system that rotates rollers and cylinders such as the plate cylinder 12 and other cylinders. The heat can be exhausted by the gas collection blower 32 or the suction fans 59. Especially in the above-described third and fifth embodiments, the gas in the print unit 2 is sent to the gas treatment unit (organic compound treatment system 33) while feeding outside air into the print unit 2. Hence, not only the VOC gas but also the air heated by the heat generated in the print unit 2 can be sucked from the inside of the cover 3 and thus sent to the gas treatment unit without dissipating the heat to the outside of the cover 3. It is therefore possible to prevent the print work environment from deteriorating due to the temperature increase in the print unit 2. Note that in this case, the gas collection blower 32 and the suction fans 59 are preferably operated even during printing, as described in the fifth embodiment. Furthermore, although not illustrated, if the cover 3 has a two-layer structure or a structure including a heat insulator, a more excellent heat exhaust effect can be obtained.

Additionally, in the print unit 2, the noise of rotation of rollers and cylinders such as the plate cylinder 12 and other cylinders, the noise of compressed air, the noise of sheet conveyance, and the like are generated as noise. However, as described in the first to fifth embodiments, since the cover 3 employs the arrangement that tightly covers the print unit 2, the noise can be prevented from leaking to the outside of the cover 3. If the cover 3 has a soundproofing function by increasing the thickness of the side walls 55 and 56 and the ceiling wall 57 or forming a structure with a noise absorbing effect inside the cover, a more excellent soundproofing effect can be obtained.

In each of the above-described embodiments, an example in which the organic compound treatment system 33 is used as the gas treatment unit has been described. However, a gas treatment unit that treats the VOC gas sent to the gas chamber by burning it can also be used. A gas storage device that stores the VOC gas in a detachable closed gas tank may be used. When filled with the VOC gas, the gas tank is detached from the gas storage device in this state and sent to a treatment facility (not shown) to reproduce the VOC gas.

The liquid waste tank 27 of the liquid waste collection device 15 is not limited to those shown in the above-described embodiments. That is, although not illustrated, an organic compound treatment device or a liquid waste purifying device can be used in place of the liquid waste tank 27. The organic compound treatment device has the same function as that of the organic compound treatment system 33, and produces a cleaning solution from a liquid waste. The liquid waste purifying device purifies a liquid waste to make it reusable as a cleaning solution.

### Explanation of the Reference Numerals and Signs

1...gas collection device, 2...print unit, 3...cover (cover portion), 4...gas transfer device (gas transfer unit), 13...ink roller group, 14...cleaning device, 21...control device, 32...gas collection blower, 34...gas chamber, 33...organic compound treatment system (gas treatment unit).

## Claims

1. A gas collection device (1) of a printing press, comprising:
a gas treatment unit (33) including a gas chamber (34);
a cover portion (3) that covers a print unit (2) of a printing press; and
a gas transfer unit (4) configured to suck a gas of a volatile organic compound produced in the print unit (2) from an inside of the cover portion (3) and transfer the gas to the gas chamber (34),
**characterized in that**
the print unit (2) comprises a cleaning device (14) configured to supply the volatile organic compound in a liquid state to a roller for ink supply, and
the gas collection device (1) further comprises a control device (21) configured to control operations of the gas treatment unit (33) and the gas transfer unit (4) based on an operation of the cleaning device (14), wherein the cleaning device (14) is connected to and controlled by the control device (21).

2. A gas collection device (1) of a printing press, comprising:
a gas treatment unit (33) including a gas chamber (34);
a cover portion (3) that covers a print unit (2) of a printing press; and
a gas transfer unit (4) configured to suck a gas of a volatile organic compound produced in the print unit (2) from an inside of the cover portion (3) and transfer the gas to the gas chamber (34),
**characterized in that**
a gas detector (72) configured to detect the gas of the volatile organic compound in the cover portion; and
a control device (21) configured to control operations of the gas treatment unit (33) and the gas transfer unit (4) based on a detection result of the gas detector (72).

3. The gas collection device (1) of the printing press according to claim 1 or claim 2, wherein the gas transfer unit (4) comprises:
a gas passage (58) including a duct (52-54) provided to the cover portion (3) and allowing the inside of the cover portion (3) and the gas chamber (34) to communicate with each other;
a suction fan (59) configured to suck the gas of the volatile organic compound produced in the print unit (2) and lead the gas to the duct (52-54); and
a blower (32) configured to suck the gas of the volatile organic compound in the gas passage (58) and transfer the gas to the gas chamber (34).

4. The gas collection device (1) of the printing press according to claim 3, wherein the gas transfer unit (4) further comprises a blower fan (62) configured to introduce outside air into the cover portion (3).

5. The gas collection device (1) of the printing press according to claim 1 or claim 2, wherein the gas transfer unit (4) comprises a filter (82, 83) configured to suck an ink mist generated in the print unit (2) from the inside of the cover portion (3) and collect the ink mist by making the ink mist adhere to the filter (82, 83).

6. The gas collection device (1) of the printing press according to claim 1 or claim 2, wherein the gas transfer unit (4) sucks a gas containing a smell component produced in the print unit (2) from the inside of the cover portion (3).

7. The gas collection device (1) of the printing press according to claim 1 or claim 2, wherein the gas transfer unit (4) sucks air heated by heat generated in the print unit (2) from the inside of the cover portion (3).

8. The gas collection device (1) of the printing press according to claim 1 or claim 2, wherein the cover portion (3) prevents noise generated in the print unit (2) from leaking to an outside.

## Patentansprüche

1. Gassammelvorrichtung (1) einer Druckmaschine, umfassend:
eine Gasbehandlungseinheit (33), die eine Gaskammer (34) enthält;
einen Abdeckbereich (3), der eine Druckeinheit (2) einer Druckmaschine abdeckt; und
eine Gasübertragungseinheit (4), die konfiguriert ist, um ein Gas einer flüchtigen organischen Verbindung, das in der Druckeinheit (2) erzeugt wird, von einer Innenseite des Abdeckbereichs (3) anzusaugen und das Gas in die Gaskammer (34) zu übertragen,
**dadurch gekennzeichnet, dass**
die Druckeinheit (2) eine Reinigungsvorrichtung (14) umfasst, die konfiguriert ist, um die flüchtige organische Verbindung in flüssigem Zustand einer Walze zur Tintenversorgung zuzuführen, und
die Gassammelvorrichtung (1) ferner eine Steuervorrichtung (21) umfasst, die konfiguriert ist, um Vorgänge der Gasbehandlungseinheit (33) und der Gastransfereinheit (4) basierend auf einem Betrieb der Reinigungsvorrichtung (14) zu steuern, wobei die Reinigungsvorrichtung (14) mit der Steuervorrichtung (21) verbunden und von dieser gesteuert ist.

2. Gassammelvorrichtung (1) einer Druckmaschine, umfassend:
eine Gasbehandlungseinheit (33), die eine Gaskammer (34) enthält;
einen Abdeckbereich (3), der eine Druckeinheit (2) einer Druckmaschine abdeckt; und
eine Gasübertragungseinheit (4), die konfiguriert ist, um ein Gas einer flüchtigen organischen Verbindung, das in der Druckeinheit (2) erzeugt wird, von einer Innenseite des Abdeckbereichs (3) anzusaugen und das Gas in die Gaskammer (34) zu übertragen,
**dadurch gekennzeichnet, dass**
ein Gasdetektor (72) konfiguriert ist, um das Gas der flüchtigen organischen Verbindung in dem Abdeckbereich zu erfassen; und
eine Steuervorrichtung (21) konfiguriert ist, um Vorgänge der Gasbehandlungseinheit (33) und der Gasübertragungseinheit (4) basierend auf einem Erfassungsergebnis des Gasdetektors (72) zu steuern.

3. Gassammelvorrichtung (1) der Druckmaschine nach Anspruch 1 oder Anspruch 2, wobei die Gasübertragungseinheit (4) umfasst:
einen Gasdurchgang (58), der einen Kanal (52-54) beinhaltet, der an dem Abdeckbereich (3) vorgesehen ist und es ermöglicht, dass die Innenseite des Abdeckbereichs (3) und die Gaskammer (34) miteinander kommunizieren;
einen Saugventilator (59), der konfiguriert ist, um das in der Druckeinheit (2) erzeugte Gas der flüchtigen organischen Verbindung anzusaugen und das Gas zu dem Kanal (52-54) zu leiten; und
ein Gebläse (32), das konfiguriert ist, um das Gas der flüchtigen organischen Verbindung in dem Gasdurchgang (58) anzusaugen und das Gas in die Gaskammer (34) zu übertragen.

4. Gassammelvorrichtung (1) der Druckmaschine nach Anspruch 3, wobei die Gasübertragungseinheit (4) ferner ein Gebläse (62) umfasst, das konfiguriert ist, um Außenluft in den Abdeckbereich (3) einzubringen.

5. Gassammelvorrichtung (1) der Druckmaschine nach Anspruch 1 oder Anspruch 2, wobei die Gasübertragungseinheit (4) einen Filter (82, 83) umfasst, der konfiguriert ist, um einen in der Druckeinheit (2) erzeugten Farbnebel von der Innenseite des Abdeckabschnitts (3) anzusaugen und den Farbnebel zu sammeln, indem der Farbnebel an dem Filter (82, 83) haftet.

6. Gassammelvorrichtung (1) der Druckmaschine nach Anspruch 1 oder Anspruch 2, wobei die Gasübertragungseinheit (4) ein Gas, das eine in der Druckeinheit (2) erzeugte Geruchskomponente enthält, von der Innenseite des Abdeckabschnitts (3) ansaugt.

7. Gassammelvorrichtung (1) der Druckmaschine nach Anspruch 1 oder Anspruch 2, wobei die Gasübertragungseinheit (4) Luft von der Innenseite des Abdeckabschnitts (3) ansaugt, die durch Wärme, die in der Druckeinheit (2) erzeugt wird, erwärmt wird.

8. Gassammelvorrichtung (1) der Druckmaschine nach Anspruch 1 oder Anspruch 2, wobei der Abdeckbereich (3) verhindert, dass in der Druckeinheit (2) erzeugte Geräusche nach außen entweichen.

## Revendications

1. Dispositif de collecte de gaz (1) d'une presse à imprimer, comprenant:
une unité de traitement de gaz (33) incluant une chambre de gaz (34);
une partie de recouvrement (3) qui recouvre une unité d'impression (2) d'une presse à imprimer; et
une unité de transfert de gaz (4) configurée pour aspirer un gaz d'un composé organique volatil produit dans l'unité d'impression (2) d'un intérieur de la partie de recouvrement (3) et transférer le gaz vers la chambre de gaz (34),
**caractérisé en ce que**
l'unité d'impression (2) comprend un dispositif de nettoyage (14) configuré pour fournir le composé organique volatil dans un état liquide à un rouleau pour une fourniture d'encre, et
le dispositif de collecte de gaz (1) comprend en outre un dispositif de commande (21) configuré pour commander des opérations de l'unité de traitement de gaz (33) et de l'unité de transfert de gaz (4) sur la base d'une opération du dispositif de nettoyage (14), dans lequel le dispositif de nettoyage (14) est relié au et commandé par le dispositif de commande (21).

2. Dispositif de collecte de gaz (1) d'une presse à imprimer, comprenant:
une unité de traitement de gaz (33) incluant une chambre de gaz (34);
une partie de recouvrement (3) qui recouvre une unité d'impression (2) d'une presse à imprimer; et
une unité de transfert de gaz (4) configurée pour aspirer un gaz d'un composé organique volatil produit dans l'unité d'impression (2) d'un intérieur de la partie de recouvrement (3) et transférer le gaz vers la chambre de gaz (34),
**caractérisé en ce que**
un détecteur de gaz (72) est configuré pour détecter le gaz du composé organique volatil dans la partie de recouvrement; et
un dispositif de commande (21) est configuré pour commander des opérations de l'unité de traitement de gaz (33) et de l'unité de transfert de gaz (4) sur la base d'un résultat de détection du détecteur de gaz (72).

3. Dispositif de collecte de gaz (1) de la presse à imprimer selon la revendication 1 ou la revendication 2, dans lequel l'unité de transfert de gaz (4) comprend:
un passage de gaz (58) incluant un conduit (52-54) prévu dans la partie de recouvrement (3) et permettant à l'intérieur de la partie de recouvrement (3) et à la chambre de gaz (34) de communiquer l'un avec l'autre;
un ventilateur d'aspiration (59) configuré pour aspirer le gaz du composé organique volatil produit dans l'unité d'impression (2) et mener le gaz vers le conduit (52-54); et
une soufflante (32) configurée pour aspirer le gaz du composé organique volatil dans le passage de gaz (58) et transférer le gaz vers la chambre de gaz (34).

4. Dispositif de collecte de gaz (1) de la presse à imprimer selon la revendication 3, dans lequel l'unité de transfert de gaz (4) comprend en outre un ventilateur soufflant (62) configuré pour introduire de l'air extérieur dans la partie de recouvrement (3).

5. Dispositif de collecte de gaz (1) de la presse à imprimer selon la revendication 1 ou la revendication 2, dans lequel l'unité de transfert de gaz (4) comprend un filtre (82, 83) configuré pour aspirer un brouillard d'encre généré dans l'unité d'impression (2) de l'intérieur de la partie de recouvrement (3) et collecter le brouillard d'encre en amenant le brouillard d'encre à adhérer au filtre (82, 83).

6. Dispositif de collecte de gaz (1) de la presse à imprimer selon la revendication 1 ou la revendication 2, dans lequel l'unité de transfert de gaz (4) aspire un gaz contenant un composé odorant produit dans l'unité d'impression (2) de l'intérieur de la partie de recouvrement (3).

7. Dispositif de collecte de gaz (1) de la presse à imprimer selon la revendication 1 ou la revendication 2, dans lequel l'unité de transfert de gaz (4) aspire de l'air chauffé par de la chaleur générée dans l'unité d'impression (2) de l'intérieur de la partie de recouvrement (3).

8. Dispositif de collecte de gaz (1) de la presse à imprimer selon la revendication 1 ou la revendication 2, dans lequel la partie de recouvrement (3) empêche du bruit généré dans l'unité d'impression (2) de s'échapper vers un extérieur.
